# EUROPÄISCHE PATENTSCHRIFT

(11) **EP 1 154 888 B1**
(45) Veröffentlichungstag und Bekanntmachung des Hinweises auf die Patenterteilung: **04.09.2002**
(21) Anmeldenummer: 00910683.2
(22) Anmeldetag: 21.02.2000
(51) Int. Cl.: B29C 44/44, B29C 44/34

(54) **VERFAHREN ZUM BETRIEB EINES FORMTEILAUTOMATEN ZUR HERSTELLUNG VON KUNSTSTOFFSCHAUMPRODUKTEN AUS BEADS**
METHOD OF OPERATION OF A MOULDED-PART MACHINE FOR PRODUCING PLASTIC FOAM PRODUCTS FROM BEADS
PROCEDE DE FONCTIONNEMENT D'UN ROBOT DE PRODUCTION DE PIECES MOULEES DESTINE A LA FABRICATION DE PRODUITS EN MOUSSE SYNTHETIQUE A PARTIR DE BILLES

(30) Priorität: 21.02.1999 DE 19907279
(43) Veröffentlichungstag der Anmeldung: 21.11.2001
(73) Patentinhaber: Gefinex Polymerschäume GmbH, 99885 Ohrdruf (DE)
(72) Erfinder: BRUNING, Jürgen, D-99885 Ohrdruf (DE); LANG, Eberhard, D-99885 Ohrdruf (DE)
(74) Vertreter: Kaewert, Klaus
(86) Internationale Anmeldenummer: EP0001392
(87) Internationale Veröffentlichungsnummer: WO00048813

(56) Entgegenhaltungen:
- WO-A-95/08433
- FR-A- 2 772 300
- US-A- 4 264 544

## Beschreibung

Die Erfindung betrifft ein Verfahren gemäß dem Oberbegriff des Anspruchs 1 zum Betrieb eines Formteilautomaten zur Herstellung von Kunststoffschaumprodukten aus Beads.

Beads sind Schaumstoffpartikel kleiner Abmessungen. Dabei können diverse Kunststoffe Anwendung finden, z.B. Polystyrol (PS), Polyethylen (PE) oder Polypropylen (PP). Beispielsweise ist in der EP0664313 folgender Anwendungsbereich vorgesehen:.
Polypropylen sowie Ethylen- und Propylencopolymere, Comonomere wie
Beispielsweise Alpha-Alkene wie Propylen, Buten, Penten, Hexen, Octen;
Ferner Vinylester wie Vinylacetat, Ester der Acrylsäure, Metahcylsäure,
Maleinsäure oder Fumarsäure von Alkoholen.

Die Beads können kugelige oder andere Formen, z.B. zylindrische Formen, aufweisen. Die Beadsformen werden zum Teil durch die Herstellung bestimmt. Unabhängig von der Form wird in der Regel vom Beadsdurchmesser zur Kennzeichnung der Beadsgröße gesprochen. Üblich sind Beadsdurchmesser von O,5 bis 6 mm. Das schließt kleiner und größere Beads nicht aus.
Grundsätzlich wird bei der Beadsherstellung zwischen der Herstellung im Autoklaven und der Extrusionsherstellung unterschieden. Nach der Herstellung werden die Beads in Silos oder anderer geeigneter Weise bevorratet, bevor eine Anwendung stattfindet.
Die Beads werden in einer Form, dem sogenannten Formteilautomaten zusammengefügt. Das geschieht durch Erwärmung der Beads an den Oberflächen bis zu einer mehr oder weniger intensiven Plastifizierung und durch Zusammendrücken. Bei ausreichendem Aufschmelzen der Oberfläche und Druck verschweißen die Beads miteinander. Bei weniger starkem Aufschmelzen und Druck entsteht gegebenenfalls eine noch ausreichende Verklebung/Versinterung.

Die Erwärmung bewirkt nicht nur das Aufschmelzen der Oberfläche sondern auch eine Ausdehnung. Die Ausdehnung ist von Art um Umfang des in den Beads eingeschlossenen Gases abhängig. Die Ausdehnung trägt zum Druckaufbau bei.

Im übrigen entsteht üblicherweise der Druck dadurch, daß die Beads mit Druck in den Formhohlraum des Formteilautomaten eingetragen werden und daß der Hohlraum vollständig gefüllt wird. Selbst, wenn die Form nach dem Befüllen gelüftet wird, bleiben die eingefüllten Beads unter Druck, weil die durch den Befüllungsdruck komprimierten Beads in dem Formhohlraum sich nicht ausdehnen können.

Zum Eintragen der Beads eignet sich ein gasförmiges Medium, insbesondere Transportluft. Transportluft ist unbeschränkt verfügbar. Zur Erzeugung von Transportluft ist ein Gebläse ausreichend. Das Gebläse zieht Umgebungsluft an und drückt diese Luft durch eine Rohrleitung in den Formhohlraum des Formteilautomaten. Auf dem Weg zum Formhohlraum zieht die Transportluft, vorzugsweise unten aus einem Silo die gewünschte Beadsmenge ab.

In dem Formhohlraum findet eine Trennung der Beads von der Transportluft statt. Während die Transportluft in den Formhohlraum hinein und anschließend wieder aus der Form herausströmen soll, sollen die Beads in dem Formhohlraum verbleiben. Die Beads werden im Formteilautomaten aufgehalten, weil die Abluftöffnung entsprechend eng gestaltet ist. D.h. der Durchmesser der Abluftöffnung ist geringer als der Durchmesser der Beads. Um zugleich eine größere Transportluftmenge zu bewältigen, ist es üblich, mehrere Abluftöffnungen vorzusehen. In der Praxis ist es üblich, eine Vielzahl von Öffnungen verteilt auf der angeströmten Fläche des Formteilautomaten zu verteilen. Die EP 0664313 beschreibt einen solchen Formteilautomaten. Dort wird von einem perforierten Formwerkzeug gesprochen. Das heißt, es sind so viele Öffnungen vorgesehen, daß von einer perforierten Fläche gesprochen werden kann.

Nach ausreichender Füllung wird die Eintragöffnung der Form geschlossen. Anschließend wird Heißdampf durch entsprechende Düsen in den Formhohlraum geblasen. Der Heißdampf strömt zwischen den Beads zur gegenüberliegenden Seite des Formhohlraumes und tritt dort aus, wie die Transportluft zuvor. Dabei verdrängt der Heißdampf die noch zwischen den Beads befindliche Luft und bewirkt der Heißdampf eine Erwärmung der Beadsoberfläche. Der Dampfdruck ist so bemessen, daß er den Strömungswiderstand der Beads im Formhohlraum überwindet. Darüber hinaus ist die Dampftemperatur so bemessen, daß in einer Bedampfungszeit (üblicherweise bis zu 5 min) die Beads so weit an der Oberfläche erwärmt und angeschmolzen sind, daß der Beadsdruck zu einer Verschweißung der Beads an den Berührungsflächen führt. Der notwendige Druck wird durch die Druckbefüllung des Formhohlraumes und/oder durch den Heißdampfdruck und/oder durch die Erwärmung und die damit verbundene Expansion der Beads bewirkt. Die Oberflächentemperatur der Beads soll die sogenannte Glastemperatur überschreiten, jedoch unterhalb der Schmelztemperatur des Kunststoffes bleiben.

Die Öffnungen in der Form bilden sich bei dem Verfahren üblicherweise auf der Oberfläche der erzeugten Formteile ab.
Die EP 0664313 zeigt ein gattungsgemäßes Verfahren, mit dem Abbildungen der Öffnungen vermieden werden. Dabei wird an mindestens einer Formwand innen ein Drahtgewebe oder ein gelochtes Blech angelegt, deren Dicke 0,2 bis 5, vorzugsweise 0,5 bis 2, mm beträgt Als Material für Draht bzw. Blech soll Metall, wie Aluminium oder rostfreier Stahl, aber auch temperaturbeständiger Kunststoff dienen. Drahtgewebe bzw. Lochblech sollen lose in das Formwerkzeug eingelegt, eingepreßt, durch Clipse oder Schrauben befestigt oder punktförmig eingelöstet oder geschweißt werden. Die Formwände können wie üblich gleichmäßig mit Perforierungen versehen sein, so daß der Heißdampf das Forminnere gleichmäßig besprühen kann. Da durch die Einlagen ein gewisser Abstand zwischen Formteiloberfläche und Forminnenwand hergestellt wird, können sich die Düsen nicht an der Formteiloberfläche abbilden. Dafür aber drücken sich die an der Oberfläche sitzenden Partikel teilweise in die Löcher des Gewebes bzw. Bleches ein, so daß deren Struktur sich der Formteiloberfläche einprägt. Im Ergebnis wird der Oberfläche anstelle ungleichmäßiger Abbildungen eine ganz gleichmäßige Strukturierung gegeben.
Die strukturierten Oberflächen sind nicht immer von Vorteil. Z.B. sind in der Lebensmittelindustrie glatte, leicht reinigungsfähige Flächen aus Hygienegründen gefordert. Das können die aus der EP 0664313 bekannten Formteile und Fomteilautomaten nicht leisten.

Die WO-A-95 08 433 zeigt ein weiteres gattungsgemäßes Verfahren, bei dem an einer Formteilantomatenserte zur Dampfverteilung ein Formelement mit Lochstruktur angelegt wird, dessen Lochstruktur beschaffen ist daß eine Kugel von 0,6 mm Durchmesser nicht durch ein Loch fallen kann.

Der Erfindung liegt die Aufgabe zugrunde, die Oberflächenqualität zu verbessern. Dabei sieht die Erfindung in der Gewebeauskleidung der Form bzw. Formteilautomaten, wie sie aus der WO-A-95 08 433 bekannt ist, einen konzeptionellen

Nach der Erfindung wird die gewünschte glatte Oberflächenstruktur mit Hilfe einer Auskleidung erreicht, die aus mehreren, miteinander verbundenen Gewebelagen besteht, von denen die Schaumseite eine geringe, in Abhängigkeit von den verarbeiteten Beads gewählte Maschenweite aufweist, die sich nicht mehr als Struktur auf der Oberfläche des Formteiles abbildet. Dabei kann es sich schaumseitig auch um mehrere Gewebelagen mit feiner Maschenweite handeln.

Die schaumseitig erfindungsgemäß verwendete Gewebekonstruktion (im weiteren wird nur von einer schaumseitigen Gewebelage gesprochen) wird mit einer oder mehreren gröberen Gewebelage abgestützt.

Das erfindungsgemäß verwendete Gewebe kann aus Metalldrähten und/oder nichtmetallischen Fäden und dergleichen bestehen.
Überraschenderweise entstehen bereits ansprechend glatte Oberflächen, wenn die Maschenweite der schaumseitigen Gewebelage kleiner als der halbe Durchmesser der eingesetzten Beads ist.
In der Anwendung auf Formteile für Lebensmittelbereiche oder dergleichen Anwendungen mit ähnlichem oder noch höherem Hygienestandard sind für die schaumseitige Gewebelage kleinere Maschenweiten vorgesehen z.B. 0,001 bis 0,5 mm, vorzugsweise 0,005 bis 0,2 mm bei Beads mit einem Durchmesser von 3 bis 5 mm. Bei anderen Beads lassen sich gleichartige(zugehörige) Grenzen mit einigen Versuchen festlegen.

Der Betrieb der Formteilautomaten mit erfindungsgemäß verwendeten Geweben zeigt noch eine Überraschung: Die sonst an der Oberfläche von Partikelschaumformteilen erkennbaren Grenzen der Beads verschwinden. Die Oberfläche wird noch besser für diverse Anwendungen, z.B. reinigungsfreundlicher und auch besser für das Aufkaschieren von Folien.

Die erkennbaren Grenzen der Beads zeigen an, daß die Beads nicht vollständig verschweißt sind. In groben Fällen lassen sich die Beads leicht aus der Formteiloberfläche herauslösen. Ein ärgerliches Phänomen, das von üblichen Styropur-Verpackungsformteilen bekannt ist. Die Erfindung führt das darauf zurück, daß bei herkömmlichen Formteilautomaten das Wasser an den Metallwänden der Formhohlräume aus dem Heißdampf teilweise kondensiert und zwischen den Beads verbleibt. Das ist darauf zurückzuführen, daß herkömmliche Formen eine Temperatur an den Formteilautomatenwänden haben, die deutlich unterhalb der Dampftemperatur liegt, z.B. bei 80 Grad Celsius während der Bedampfung. Dagegen hat der Dampf auch bei der Verarbeitung von Polystyrol eine Temperatur von etwa 120 Grad Celsius bei etwa 1,2 bar. Bei PP ist die Differenz noch gravierender. In dem Verfahren ist ein Dampf von etwa 170 Grad Celsius bei 4 bis 6 bar erforderlich. Mit größer werdender Temperaturdifferenz ist auch mit größerem Kondensatzanfall zu rechnen.
Das Wasser wirkt im Form als Trennmittel zwischen den Beads.

Erst die erfindungsgemäß verwendeten mehrlagigen Gewebeschichten verhindern den Kondensatanfall. Die Erfindung führt das auf folgendes zurück: erstes besitzt das erfindungsgemäß verwendete Gewebe gegenüber anderen bekannten Formteilautomaten eine extrem gute Heißdampf- und Kondensatabführung. Zweitens besitzt das erfindungsgemäß verwendete Gewebe gegenüber herkömmlichen Einrichtungen eine vergleichsweise sehr geringe Wärmeaufnahme, so daß es schnell zu einer Aufheizung des erfindungsgemäß verwendeten Gewebes kommt. Das gilt vor allem in dem entscheidenden Berührungsbereich mit dem Schaum. Nach dem Aufheizen der Berührungsflächen ist nicht mehr mit einer Kondensatbildung zu rechnen.

Soweit es bei der Heißdampfbeaufschlagung anfänglich zu einem Kondensatanfall an der schaumseitigen Gewebelage kommt, wird das Kondensat vom nachdringenden Heißdampf weitergetragen und ausgetragen.
Kondensat, das sich auf der Strecke des Heißdampfes von der schaumseitigen Gewebelage zum Austrag aus dem Formteilautomaten bildet, wird wahlweise nach Beendigung der Heißdampfbeaufschlagung unter Anlegung eines Unterdruckes abgesogen.
In der Regel ist ausreichend, in der Abdampfstrecke (Weg des austretenden Heißdampfes) eine Dampfkammer einzurichten und dort den Unterdruck anzulegen.

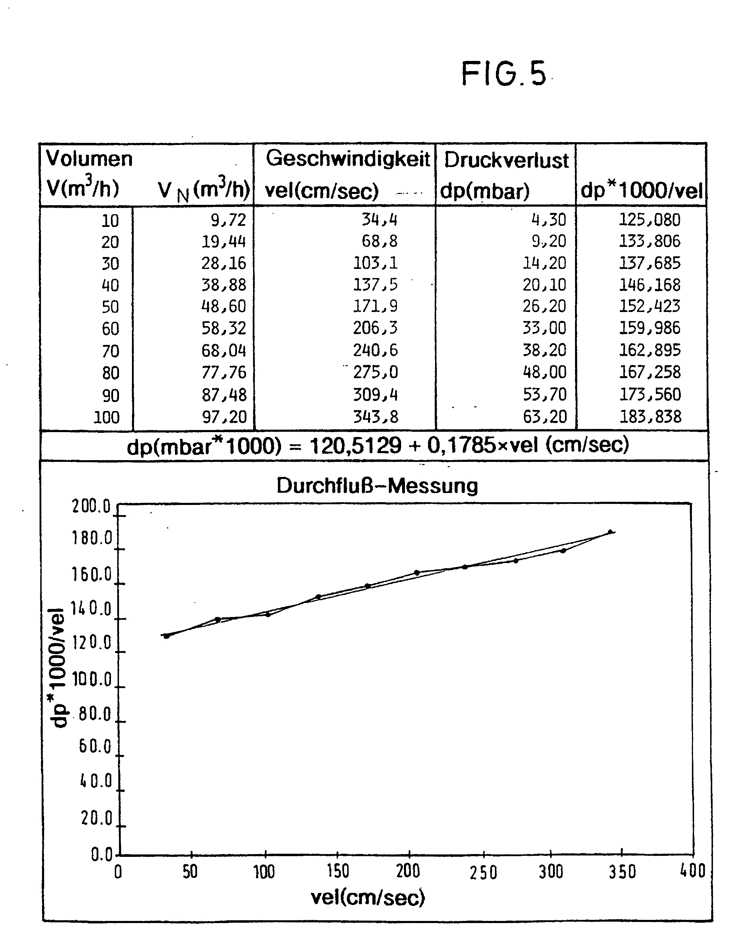

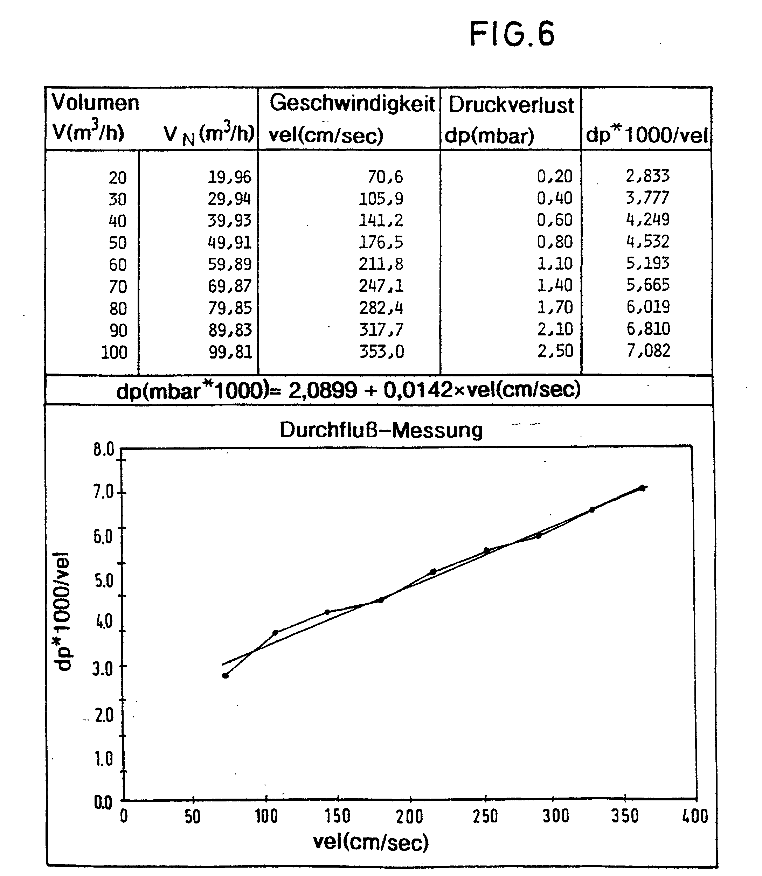

Die erfindungsgemäße Durchlässigkeit des verwendeten Gewebes läßt sich am Strömungswiderstand ablesen. Die unter Fig. 5 und 6 wiedergegebenen Untersuchungen sind bei
a) Fig. 5 bei einer Außentemperatur von 22 Grad Celsius einem atm.Druck von 988 mbar und
   einem Probendurchmesser von 100 mm und
b) Fig. 6 bei einer Außentemperatur von 23 Grad Celsius einem atm.Druck von 1018 mbar und
   einem Probendurchmesser von 100 mm durchgeführt worden. Das erfindungsgemäß verwendete Gewebe nach Fig. 5 besitzt insgesamt 4 Gewebelagen mit einer schaumseitigen Gewebelage mit einer Maschenweite von 0,005 mm.
   Das erfindungsgemäß verwendete Gewebe nach Fig. 6 besitzt gleichfalls 4 Gewebelagen mit einer schaumseitigen Gewebelage mit einer Maschenweite von 0,14 mm.

Das erfindungsgemäß verwendete Gewebe erlaubt eine wesentlich intensivere Kühlung als bei herkömmlichen Formteilautomaten.
Grundsätzliche Kühlvorteile ergeben sich durch eine wesentliche geringere Masse des erfindungsgemäß verwendeten Gewebes gegenüber vergleichbaren Systemen.
Außerdem läßt sich z.B. auf ganz kurzem Wege mittels eingeblasener Kühlluft eine Abkühlung des erfindungsgemäß verwendeten Gewebes und der außen liegenden Schichten des entstandenen Formteiles erreichen. Die außen liegenden Schichten des entstandenen Formteiles bestimmen dessen Abmessungen.

Die erfindungsgemäß verwendete Gewebe sind auch für die Beaufschlagung mit anderem Kühlmittel geeignet. Auch Wasser kann Kühlmittel sein. Durch Besprühen des entstandenen Formteiles mit Kühlwasser können sich besonders günstige Verhältnisse ergeben.

Während der ersten Abkühlung müssen die Formteile in dem Formteilautomaten verbleiben. Die Kühlzeit bestimmt wesentlich die Zykluszeit der Fertigung. Durch die erfindungsgemäße Kühlung läßt sich die Zykluszeit entsprechend verringern.
Der Herstellungszyklus endet mit dem Ausstoß der entstandenen Formteile aus dem Formteilautomaten. Die formbestimmenden Flächen sollen dann eine Temperatur unterhalb des Glaspunktes haben. Bei Polystyrol liegt die Ausstoßtemperatur bei 40 bis 90 Grad Celsius, bei PP bei 70 bis 100 Grad Celsius.
Vorteilhafterweise ist die erfindungsgemäße glatte Gewebefläche auch dem Ausformen günstig.

Der Faden- und Drahtdurchmesser ergibt sich üblicherweise aus der Maschenweite. Für die Gestaltung der erfindungsgemäß verwendeten Gewebelagen kann die Faden- und Drahtdicke/Durchmesser in Abhängigkeit von der Maschenweite auch frei gewählt werden. Günstig ist, wenn die Faden- und Drahtdicke/Durchmesser der schaumseitigen Gewebelage gleich oder kleiner als die 10fache Maschenweite ist. Noch größere Vorteile hinsichtlich der Oberfläche und hinsichtlich der Durchlässigkeit von Luft und Dampf ergeben sich, wenn die Faden- und Drahtdicke/Durchmesser gleich oder kleiner als die fünffache Maschenweite ist. Es können auch Faden und Drähte mit einer Dicke/Durchmesser in Betracht kommen, der gleich der Maschineweite oder kleiner ist.

Die schaumseitige Gewebelage wird nach der Erfindung durch eine gröbere Stützgewebekonstruktion getragen, das insgesamt eine größere Maschenweite besitzt, vorzugsweise die 1,5 bis 20fache Maschenweite, und eine größere Faden- und Drahtdicke, vorzugsweise auch das 1,5 bis 20fache der Faden- und Drahtdicke in der schaumseitigen Gewebelage/Gewebekonstruktion. Vor allem dann ergeben sich gute Strömungsverhältnisse in dem erfindungsgemäß verwendeten Gewebe,
a) wenn die Maschenweite der Stützgewebekonstruktion größer als das Maß der Maschenweite der schaumseitigen Lage plus der 2,5fachen Faden- oder Drahtdicke aus der schaumseitigen Lage ist
   und/oder
b) wenn die erfindungsgemäß verwendeten Gewebelagen hinsichtlich ihrer Webrichtung so eingebaut werden, daß die Webrichtungen zweier benachbarter Gewebelagen um 90 Grad voneinander abweichen.

Das Weben wird durch die Schuß- und Kettfäden bzw. Schuß- und Kettdrähten bestimmt. Dabei ergibt sich eine Bahnenware. Die Längsrichtung der Bahn wird im folgenden als Webrichtung bezeichnet.
Die Webrichtung bleibt auch dann erhalten, wenn die von einer Gewebebahn für das erfindungsgemäß verwendete Gewebe Abschnitte abgelängt oder Ausschnitte gefertigt werden. Die Webrichtung läßt sich an den Schuß- und Kettfäden bzw. Schuß- und Kettdrähten identifizieren. Dabei ist die Unterscheidung leicht, weil Schuß und Kette im Gewebe sich erkennbar unterscheiden. Zur erfindungsgemäßen Verlegung um 90 Grad versetzt muß lediglich darauf geachtet werden, daß sich in zwei benachbarten, erfindungsgemäß verwendeten Gewebelagen die gleichartig verarbeiteten Fasern bzw. Drähte sich einander kreuzen. Bei 90-Grad-Versatzlage entsteht ein genau senkrechtes Kreuzen.
Es kann aber auch Kreuzen unter einem Winkel stattfinden.

Bei mehr als zwei erfindungsgemäß verwendeten Gewebelagen gelten obige Verhältnisse vorzugsweise in Bezug auf die jeweils aneinanderliegende, erfindungsgemäß verwendete Gewebelagen. Die jeweils kleineren Abmessungen betreffen die dem Schaum nähere erfindungsgemäß verwendete Gewebelage. Wahlweise können sich einzelne kleinmaschigen Lagen in der schaumseitigen Gewebekonstruktion und einzelne großmaschige Lagen in der Stützgewebekonstruktion wiederholen.

Günstig sind drei und mehr Gewebelagen für das erfindungsgemäß verwendete Gewebe. Durch die groberen, erfindungsgemäß verwendeten Gewebelagen kann sich Heißdampf im erfindungsgemäß verwendeten Gewebe hervorragend verteilen.

Die metallischen, erfindungsgemäß verwendeten Gewebelagen können miteinander verschweißt werden. Dabei ist ein induktives Verschweißen günstig. Das induktive Verschweißen läßt sich sehr gut kontrollieren, so daß keine Gefahr eines Durchbrennens einzelner Drähte zu befürchten ist.
Metallische erfindungsgemäß verwendete Gewebelagen lassen sich auch versintern. Das Versintern ähnelt dem Verschweißen. Unter Erwärmung der Berührungsflächen findet ein Zusammendrücken statt. Während die Erwärmung beim Verschweißen deutlich höher als beim Versintern ist, ist der Druck beim Verschweißen wesentlich geringer als beim Versintern.
Ferner kommt ein Verlöten der metallischen, erfindungsgemäß verwendete Gewebelagen in Betracht.
Jegliche erfindungsgemäß verwendeten Gewebelagen lassen sich verkleben oder mit Befestigungs- oder Spannelementen in der gewünschten Form und Position halten. Als Befestigungs- oder Spannelemente eignen sich diverse Mittel, z.B. Schrauben oder Nieten. Nichtmetallische erfindungsgemäß verwendete Gewebelagen können z.B. aus Kohlefasern bestehen. Kohlefasern besitzen eine hohe Festigkeit und eine geringe Wärmeleitfähigkeit. Es kann von Vorteil sein, metallische erfindungsgemäß verwendete Gewebelagen mit nichtmetallischen erfindungsgemäß verwendeten Gewebelagen zu kombinieren.
Insbesondere metallische, erfindungsgemäß verwendete Gewebelagen eignen sich auch für eine Befestigung durch Verpressen oder Verbördeln.

Die erfindungsgemäß, verwendeten Gewebe können als Verbundmaterial vorbereitet und in die Form eingesetzt werden. Die Verbindung der erfindungsgemäß verwendeten Gewebelagen kann auch erst in der Form erfolgen.
Zwar ist eine teilflächige Verbindung der erfindungsgemäß verwendeten Gewebelagen und/oder teilflächige Verbindung des erfindungsgemäß verwendeten Gewebes mit den dahinter liegenden Formteilautomatenwänden möglich, eine vollflächige Verbindung kann aber Vorteile bringen.

Überraschenderweise ist der ausströmseitige Kondensatanfall aus dem Heißdampf bei der erfindungsgemäßen Verwendung von erfindungsgemäß verwendeten Geweben sehr viel kleiner als in herkömmlichen Formteilautomaten. Der Kondensatanfall beeinträchtigt gleichfalls die Qualität der Produkte.
Die Erfindung verbessert auch die Zykluszeiten. Diese können verkürzt werden. Bei 100 mm dicken Formteilen können ohne weiteres Zykluszeiten von 2 bis 5 min eingehalten werden

Günstig sind Drahtgewebe aus Stahl, insbesondere mit Edelstahl bildenden Legierungsanteilen wie Chrom, Nickel und Molybdän.

Die Gesamtdicke der erfindungsgemäß verwendeten Gewebeschicht kann durch den notwendigen Luft/Dampfdurchtritt und/oder durch die Stabilität beeinflußt werden. Je dicker die Fasern/Drähte sind und je größer die Maschenweiten sind, desto besser kann der Heißdampf durchströmen. Die Dicke beträgt wahlweise bis 15 mm, insbesondere 3 bis 5 mm.

Wahlweise liegen die erfindungsgemäß verwendeten Gewebe auf einer geschlossenen Wand oder auf einer mit Durchtrittsöffnungen versehenen Wand auf und/oder sind die erfindungsgemäß verwendeten Gewebe ganz oder teilweise selbsttragend ausgebildet und/oder liegen ganz oder teilweise an tragenden Flächen des Formteilautomaten an. Die zugehörigen Formteilautomatenwände bestehen vorzugsweise aus Metall, z.B. Aluminium oder Sinteraluminium, oder aus Keramik. Die Wände können auch mit einer porösen, gasund wasserdurchlässigen Beschichtung versehen sein, die der Bedampfung und dem Dampfaustrag förderlich ist.

Wahlweise ist das erfindungsgemäß verwendete Gewebe plattenförmig, eben oder geformt. Die erfindungsgemäß verwendeten Gewebelagen verformung ist auch unabhängig von der erfindungsgemäßen Anzahl von verwendeten Gewebelagen für Formteilautomaten wichtig und anwendbar.
Die Verformung metallischer, erfindungsgemäß verwendeter Gewebe kann mittels einer geeigneten Presse durch Pressen und/oder Tiefdrücken erreicht werden. Die Presse besitzt Matrize und Stempel, die der gewünschten Formfläche nachgebildet sind.
Die Verformung kann kalt erfolgen, wird aber wesentlich erleichtert, wenn die erfindungsgemäß verwendeten metallischen Gewebe erwärmt werden.

Die Gewebeschichten werden einzeln oder gemeinsam verformt.
Bei gemeinsamer Verformung ist es von Vorteil, auf der schaumseitigen Lage ein Biegehilfsmaterial mit etwa der gleichen Dicke wie das erfindungsgemäß verwendeten Gewebe zu befestigen, so daß die schaumseitige Lage in dem verformten Verbundmaterial aus Gewebe und Biegehilfsmaterial in etwa die neutrale Faser bildet. Dabei wird die Erkenntnis genutzt, daß die neutrale Faser bei einer Biegeverformung die geringste Verformung erfährt. In etwa die gleiche Dicke schließt Abweichungen der Biegehilfsmaterial-Dicke von plus/minus 50% von der Gewebe-Dicke ein. Das Biegehilfsmaterial ist vorzugsweise eine ungeschäumte Folie/Platte aus PE(Polyethylen) und/oder PP(Polypropylen).
Das PE/PP-Material bildet zugleich eine Schutzfolie. Es ist von Vorteil an allen belasteten Gewebe-Außenflächen während der Verformung Schutzfolien anzuordnen.
Zur Schonung der Gewebe-Außenflächen trägt auch eine höhere Werkzeughärte an den Berührungsflächen mit dem erfindungsgemäß verwendeten Gewebe bei. Das verhindert ein Verkrallen des erfindungsgemäß verwendeten Gewebes in der Werkzeugberührungsfläche.

Vor dem Verformen des erfindungsgemäß verwendeten Gewebes und/oder nach dem Verbinden der erfindungsgemäß verwendeten Gewebelagen kann ein Wärmebehandlung der Gewebelagen bzw. des Verbundmaterials Materialspannungen abbauen und das anschließende Verformen erleichtern.

Erfahrungsgemäß bedürfen die Formteilautomaten nach 500 bis 1000 Zyklen einer Reinigung. Dann sind die zuführenden und abführenden Leitungen so verschmutzt, daß die Reinigung erforderlich ist. Mit dem erfindungsgemäß verwendeten Gewebe eröffnet sich eine Möglichkeit, die Reisezeit (Betriebsintervalle) bis zur nächsten Reinigung zu verlängern bzw. die Zahl der Zyklen wesentlich zu erhöhen. Die erfindungsgemäß verwendeten Gewebe sind günstig, um die Bedampfungsrichtung umzukehren. Durch Änderung der Bedampfungsrichtung werden die Schmutzpartikel, die sich in einem Gewebe festgesetzt haben, wieder ausgeblasen. Das Ausblasen kann am Ende üblicher Reisezeit erfolgen. Das Ausblasen kann aber auch nach kurzer Reisezeit, im Extremfall bei jedem zweiten Zyklus erfolgen.
Vorteilhafterweise ist die erfindungsgemäße Technik zur Verlängerung der Reisezeit für Formteilautomaten auch unabhängig von der Mehrlagigkeit des Gewebes und auch auf andere Formteilautomaten anwendbar.

Wegen der möglichen Gewebeverschmutzung ist wahlweise jeweils anströmseitig ein Filtergewebe vorgesehen. In dem Filtergewebe sammeln sich die Schmutzpartikel.

Ein weiterer Vorteil der erfindungsgemäß verwendeten Gewebe entfaltet sich beim Querbedampfen. Nach der Erfindung wird eine Formteilfüllung aus mehreren Richtungen bedampft. Wahlweise geschieht das gleichzeitig oder in wechselnden Intervallen.
Durch Querbedampfen wird die Qualität der Verschweißung der Beads vergleichmäßigt. Bei dem Bedampfen in nur einer Richtung fällt die Dampftemperatur während des Materialdurchganges durch Wärmeabgabe ab. Folglich fällt entsteht hinsichtlich der Oberflächentemperatur der Beads auch ein Gefälle. Durch Querbedampfen werden die Bereiche mit Frischdampf erreicht, die vorher am Ende der Dampfstrecke lagen.
Die Querbedampfung wird dadurch erreicht, daß an weiteren Formteilautomatenwänden Bedampfungsöffnungen und ggfs. Abdampföffnungen mit entsprechenden Zuleitungen und Ableitungen vorgesehen sind. Zur Steuerung der einzelnen Leitungen sind in den Zuleitungen und/oder Ableitungen geeignete Schieber vorgesehen.

Das Querbedampfen ist auch von Vorteil, wenn keine gleichmäßige Dampfverteilung im Formhohlraum stattgefunden hat. Durch Querbedampfen werden dann die Bereiche mit Dampf erreicht, in die der Dampf nur unzulänglich eingedrungen ist.

Das Querbedampfen hat auch unabhängig von dem erfindungsgemäßen Gewebe für Formteilautomaten Bedeutung.

In der Zeichnung ist ein Ausführungsbeispiel der Erfindung dargestellt.

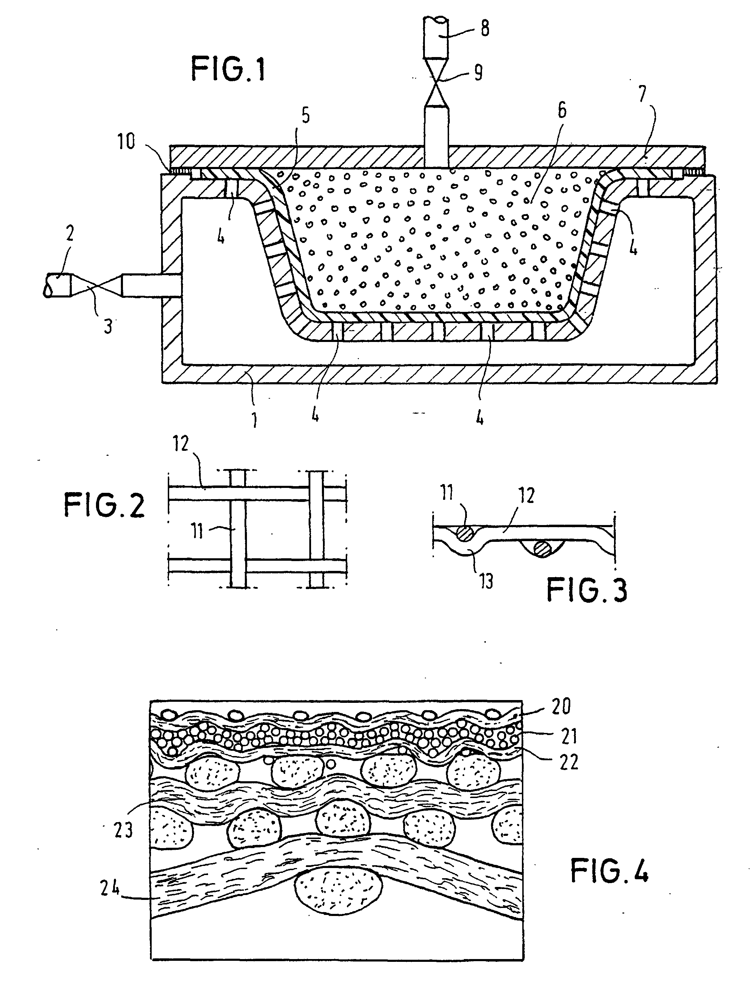

Die Fig. 1 zeigt die Form eines Formteilautomaten, bestehend aus einem Unterteil 1 und einem Oberteil 7 mit einer zwischenliegenden Dichtung 10 am Rand. Das Unterteil 1 ist mit einer Drahtgewebeschicht 5 versehen.

Nach Schließen der Form wird der Formhohlruam durch eine Leitung 2 unter Öffnung eines Ventils 3 mit Unterdruck beaufschlagt. Der Unterdruck wird durch Abpumpen der Luft erzeugt.
Zugleich fließt Druckluft durch Öffnen eines Ventils 9 durch eine Leitung 8 nach. Mit der Luft werden Beads 6 eingetragen. Die Beads haben einen Durchmesser von 3mm und bestehen aus PP. Der Luftdruck beträgt 6 bar.

Die Druckluft strömt durch die Gewebeschicht 5 ab. Die Gewebeschicht 5 nimmt die Druckluft in optimaler Weise auf und leitet sie zu Öffnungen 4 in dem Unterteil 1.
Die Gewebeschicht 5 ist zweischichtig und aus Drahtgewebe. Jede Schicht hat eine unterschiedliche Maschenweite. Die beadsseitige Gewebeschicht hat eine wesentlich geringere Maschenweite als die unterteilseitige Gewebeschicht. Im Ausführungsbeispiel 100 mesh (0,14 mm). Dabei ergibt sich in üblicher Abhängigkeit der Drahtdurchmesser von der Maschenweite ein Drahtdurchmesser von 0,112 mm. In Ausnahmefällen wird der Drahtdurchmesser frei gewählt.
Die Fig. 2 zeigt die beadsseitige Gewebeschicht in einer vergrößerten Draufsicht. Die Stahldrähte liegen übereinander. Fig. 3 zeigt den Querschnitt durch das beadsseitige Drahtgewebe. In der Unterlage bilden die Drähte 11 und 12 Bögen 13, so daß beadsseitig eine ebene (abgesehen von der in Fig. 1 gezeigten Kontur der Gewebeschicht) Fläche entsteht.

Die Mehrlagigkeit des Gewebes ist in Fi.g 4 dargestellt. Die Lage 20 besteht aus den in Fig. 2 und 3 dargestellten Drähten 11 und 12. Die Lage 22 ist identisch mit der Lage 20.
Dazwischen befindet sich im Ausführungsbeispiel eine Filterlage 21 aus ungewebten, nebeneinander liegenden Drähten.
Die Lage 23 zeigt die deutlichen Merkmale eines Stützgewebes. Der Drahtdurchmesser ist ein Vielfaches vom Drahtdurchmesser der Lagen 20 bis 22, desgleichen die sich aus dem Abstand der Drähte ergebende Maschenweite.
Die Lage 24 beinhaltet ein noch gröberes Stützgewebe.
Alle Gewebelagen sind miteinander versintert.

Die in Fig. 1 gezeigte Kontur entsteht durch Verformung in einer geeigneten Presse. Dabei hat die zu der Presse gehörige Matrize die formhohlseitige Kontur des Unterteils 1. Das in Fig. 4 dargestellte Gewebe liegt auf der Matrize auf. Darüber wird eine Schicht aus ungeschäumtem PE-Folien gelegt, deren Dicke der Gewebe-Dicke entspricht. Anschließend werden Gewebe und aufliegende Folien-Schicht in die Matrize gedrück. Die zugehörige Patrize hat dabei in etwa die Form des in Fig. 1 dargestellten Formteiles bzw.
Formhohlraumes. In etwa heißt, es muß bei der Konturbildung der Patrize noch die aufgelegte Folienschicht berücksichtigt werden.

Nach vollständiger Füllung des Formhohlraumes wird statt der Luft Heißdampf durch die Leitung 8 in den Formhohlraum gedrückt. Der Heißdampf muß durch die Beads hindurchströmen. Dabei wird die Luft zwischen den Beads verdrängt. Durch den Dampf erwärmen sich die Beads. Deren Oberfläche plastifiziert.

Durch die Erwärmung expandieren die Beads. Aufgrund der plastifizierten Außenfläche der Beads und aufgrund des Druckes kommt es an allen Berührungsstellen zwischen den Beads zu einer Verschweißung. Zugleich schließen sich die Zwickelräume zwischen den Beads.

Das fertige Produkt 6 wird nach ausreichender Abkühlung nach Öffnen der Form aus dem Formhohlraum entnommen.

## Patentansprüche

1. Verfahren zum Betrieb eines Formteilautomaten zur Herstellung von Kunststoffschaumprodukten aus Beads, mit einem Fomhohlraum, in den die Beads eingetragen und mit einem gasförmigen Wärmeträger, insbesondere Heißdampf, beaufschlagt werden, wobei der gasförmige Wärmeträger aus einer Formteilautomatenfläche in den Formhohlraum eintritt und durch eine andere Formteilautomatenfläche wieder austritt und wobei an mindestens einer Formteilautomatenfläche ein Gewebe vorgesehen ist, **gekennzeichnet durch** Verwendung eines mehrlagigen Gewebes (5) mit einer schaumseitigen feinmaschigen Gewebelage (11,12,20,21,22) und einer darunter angeordneten grobmaschigen Gewebelage (23,24) als Stützkonstruktion.

2. Verfahren nach Anspruch 1, **gekennzeichnet durch** Herstellung glatter Formteilflächen

3. Verfahren nach Anspruch 1 oder 2, **gekennzeichnet durch** die Verwendung einer schaumseitigen Gewebelage (11,12,20,21,22) mit einer Maschenweite, die kleiner als der halbe Beadsdurchmesser ist und/oder oder **durch** die Verwendung einer Gewebekonstruktion mit zumindest einer schaumseitig massearmen Gewebelage und/oder einer Kondensatabführung.

4. Verfahren nach Anspruch 3, **gekennzeichnet durch** eine Kondensatabsaugung.

5. Verfahren nach Anspruch 3, **gekennzeichnet durch** Verwendung einer Dampfkammer in der Abdampfstrecke und Anlegung eines Unterdruckes an die Dampfkammer.

6. Verfahren nach Anspruch 3, **gekennzeichnet durch** die Verwendung einer Gewebelage (11,12,20,21,22) mit einer Maschenweite von 0,001 bis 0,5 mm, vorzugsweise 0,005 bis 0,2 mm, bei Beads mit einem Durchmesser von 3 bis 5 mm.

7. Verfahren nach Anspruch 4, **gekennzeichnet durch** die Herstellung reinigungsfreundlicher Flächen für den Transport und/oder Lagerung von Lebensmitteln und/oder für die Verarbeitung von Formteilen unter Aufkaschieren von dünnen Folien.

8. Verfahren nach Anspruch 2 oder 3, **gekennzeichnet durch** Verwendung von Geweben (11,12,20,21,22, 23,24) mit einer sich aus der Maschenweite ergebenden üblichen Fadenoder Drahtdicke oder einer Dicke, die gleich oder kleiner der 10fachen, vorzugsweise gleich oder kleiner der fünffachen Maschenweite ist oder sogar gleich oder kleiner als die Maschenweite ist.

9. Verfahren nach einem der Ansprüche 1 bis 8, **gekennzeichnet durch** die Beaufschlagung des Formteiles **durch** das Gewebe hindurch mit Kühlmittel nach der Beendigung der Bedampfung.

10. Verfahren nach Anspruch 9, **gekennzeichnet durch** die Verwendung von Kühlluft und/oder Kühlwasser als Kühlmittel.

11. Verfahren nach einem der Ansprüche nach einem der Ansprüche 1 bis 10, **gekennzeichnet durch** eine Querbedampfung.

12. Verfahren nach Anspruch 11, **gekennzeichnet durch** Dampfzuführungsöffnungen und/oder Abdämpföffnungen in den verschiedenen Formteilautomatenwänden und Zuleitungen bzw. Ableitungen mit Schiebern.

13. Verfahren nach einem der Ansprüche 1 bis 12, **gekennzeichnet durch** Umkehrung der Freiblasen der Gewebelage.

14. Verfahren nach Anspruch 13, **gekennzeichnet durch** Freiblasen nach einem Zyklus oder mehreren Zyklen unabhängig von der Verschmutzungslage oder Freiblasen nach der Verschmutzung.

15. Verfahren nach Anspruch 13 oder 14, **gekennzeichnet durch** Umkehrung der Dampfströmung mit und/oder ohne Befüllung des Formteilautomaten.

16. Verfahren nach einem der Ansprüche 1 bis 15, **gekennzeichnet durch** die Verwendung einer Stützgebekonstruktion (23,24) mit einer Maschenweite, die gegenüber der Maschenweite der schaumseitigen Gewebekonstruktion das 1,5 bis 20 fache beträgt, und mit einer Faden- und oder Drahtdicke, die gegenüber der schaumseitigen Gewebekonstruktion (11,12,20,21,22) das 1,5 bis 20fache beträgt.

17. Verfahren nach Anspruch 16, **gekennzeichnet durch** die Verwendung einer Stützgewebekonstruktion (23,24), deren Maschenweite mindestens gleich der Maschenweite der schaumseitigen Gewebekonstruktion (11,12,20,21,22) plus dem 2,5fachen der Faden- oder Drahtdicke der schaumseitigen Gewebekonstruktion (11,12,20,21,22) ist.

18. Verfahren nach einem der Ansprüche 1 bis 17, **gekennzeichnet durch** Verwendung einer Gewebekonstruktion (20,21,22,23,24) mit einer Versatzlage (21) zwischen den Gewebelagen.

19. Verfahren nach einem der Ansprüche 1 bis 18, **gekennzeichnet durch** die Verwendung von Gewebekonstruktionen (5), deren Gewebelagen (11,12,20,21,22,23,24) untereinander und/oder mit der zugehörigen Formteilautomatenwand ganz oder teilweise verbunden sind, **durch**
a) Verschweißen und/oder
b) Verkleben und/oder
c) Versintern und/oder
d) Befestigungselement und/oder
e) Verpressen und/oder Verbördeln

20. Verfahren nach Anspruch 19, **gekennzeichnet durch** induktive Verschweißung.

21. Verfahren nach einem der Ansprüche 1 bis 19, **gekennzeichnet durch** Drähte aus Stahl und/oder Fäden aus Kohlefasern.

22. Verfahren nach einem oder mehreren der Ansprüche 1 bis 21, **gekennzeichnet durch** die Verwendung von Gewebekonstruktionen (5) mit einer Dicke bis 15 mm.

23. Verfahren nach Anspruch 22, **gekennzeichnet durch** Verwendung einer Gewebekonstruktion (5) mit einer Dicke von 3 bis 5 mm.

24. Verfahren nach einem der Ansprüche nach einem der Ansprüche 1 bis 23, **gekennzeichnet durch** einzelne oder gruppenweise oder gemeinsame Verformung aller Gewebelagen (11,12,20,21,22,23,24) zur Anpassung an die Formteilautomatenwände.

25. Verfahren nach Anspruch 24, **gekennzeichnet durch** die Pressen der Gewebelagen (11,12,21,22,23,24).

26. Verfahren nach Anspruch 25, **gekennzeichnet durch** Verwendung einer Schutzfolie und/oder Schutzplatte zwischen Gewebelage (11,12,21,22,23,24) und Preßwerkzeug und/oder Verwendung zumindest oberflächengehärteter Presswerkzeuge.

27. Verfahren nach Anspruch 25, **gekennzeichnet durch** Verwendung einer Schutzfolie an der schaumseitigen Gewebelage (11,12,20,21,22) mit einer Dicke, die etwa die Dicke des übrigen zur Verformung bestimmten Materiales hat.

28. Verfahren nach Anspruch 26 oder 27, **gekennzeichnet durch** die Verwendung Schutzfolien und/oder Platten aus PE und/oder PP.

29. Verfahren nach einem der Ansprüche 24 bis 28, **gekennzeichnet durch** eine Wärmebehandlung metallischer Gewebelagen vor der Verformung und/oder nach der Verbindung der Gewebelagen.

30. Verfahren nach einem der Ansprüche 1 bis 29, **gekennzeichnet durch** Verwendung einer oder mehrerer Filterlagen (22) an dem Gewebe und/oder **durch** Verwendung von Geweben mit einer oder mehreren eingeschlossenen Filterlagen (22).

31. Verfahren nach einem oder mehreren der Ansprüche 1 bis 30 **gekennzeichnet durch** Verwendung einstückiger oder mehrstückiger Auskleidungen von Formteilhohlräumen und/oder ganz oder teilweise selbsttragender Auskleidungen.

32. Verfahren nach einem oder mehreren der Ansprüche 1 bis 31, **gekennzeichnet durch** die Verwendung von porösen, gas- und/oder wasserdurchlässigen Formteilautomatenwänden

33. Verfahren nach Anspruch 32 **gekennzeichnet durch** die Verwendung von Formteilwänden aus Aluminium und/oder Sintermaterial.

## Claims

1. A process for operating a moulding machine to manufacture foamed plastic articles from beads, by introducing the beads into a cavity mould. contacting them with a gaseous heat transfer medium, in particular superheated steam, whereby the gaseous heat transfer medium enters the cavity mould from one wall of the moulding machine and subsequently exits through another wall of the moulding machine and whereby on at least one wall of the moulding machine is provided a woven fabric, **characterized by** the use of a multi-ply woven fabric (5) with a fine mesh woven fabric layer on the foam side (11,12,20,21,22) together with an underlying coarse mesh woven fabric layer (23,24) as a supporting structure.

2. A process according to Claim 1, **characterized by** the manufacture of moulded articles with smooth surfaces.

3. A process according to Claim 1 or 2, **characterized by** the use of a woven fabric layer on the foam side (11,12,20,21,22) with a mesh size that is smaller than one half of the diameter of the beads and/or by the use of a woven fabric construction with at least one permeable woven fabric layer on the foam side and/or with condensate removal.

4. A process according to Claim 3. **characterized by** condensate suction.

5. A process according to Claim 3. **characterized by** the use of a steam chamber in the exhaust steam stream and the application of a reduced pressure to the steam chamber.

6. A process according to Claim 3, **characterized by** the use of a woven fabric layer (11,12,20,21,22) with a mesh size from 0.001 to 0.5 mm, preferably 0.005 to 0.2 mm in the case of beads with a diameter between 3 and 5 mm.

7. A process according to Claim 4, **characterized by** the production of easy-cleanable surfaces for the transport and/or storage of foodstuffs and/or for the manufacture of mouldings for lamination with thin films.

8. A process according to Claim 2 or 3, **characterized by** the use of woven fabrics (11,12,20,21,22,23,24) with a fibre or wire thickness that typically correspond to the mesh size, or of a thickness that is the same or smaller than 10 times, preferably the same or smaller than five times the mesh size or even the same or smaller than the mesh size.

9. A process according to one of the Claims 1 to 8, **characterized in that** the moulded part is contacted through the woven fabric with a coolant subsequent to the end of the steaming step.

10. A process according to Claim 9, **characterized by** the use of cold air and/or cold water as the coolant.

11. A process according to one of the Claims 1 to 10, **characterized by** multiaxial steaming.

12. A process according to Claim 11, **characterized by** steam inlet openings and/or exhaust steam openings in the various walls of the moulding machinc and conduits, respectively drainage pipes equipped with slide valves.

13. A process according to one of the Claims 1 to 12, **characterized by** reverse blowing to free the woven fabric.

14. A process according to Claim 13, **characterized by** blowing free after one or more cycles, irrespective of the state of contamination or blowing free after contamination.

15. A process according to Claims 13 or 14, **characterized by** a reversal of the steam flow with and/or without filling of the moulding machine.

16. A process according to one of the Claims 1 to 15, **characterized by** the use of a supporting structure (23,24) with a mesh size, which is 1.5 to 20 times the mesh size of the woven fabric construction on the foam side and with a fibre thickness and or wire thickness, which is 1.5 to 20 times that of thc woven fabric construction (11,12,20,21,22) on thc foam side.

17. A process according to Claim 16, **characterized by** the use of a supporting structure (23,24) with a mesh size, which is at least the same as the mesh size of the woven fabric construction on the foam side (11,12,20,21,22) plus 2.5 times the fibre thickness or wire thickness of the woven fabric construction (11,12,20,21,22) on the foam side.

18. A process according to one of the Claims 1 to 17, **characterized by** the use of a woven fabric structure (20,21.22,23,24) with a partition layer (21) between the woven fabric layers.

19. A process according to one of the Claims 1 to 18, **characterized by** the use of woven fabric constructions (5) in which the woven fabric layers (11,12,20,21,22,23,24) are partially or completely joined to each other and/or with the corresponding wall of the moulding machine by
a) welding and/or
b) gluing and/or
c) sintering and/or
d) fixing elements and/or
e) moulding and/or flanging

20. A process according to Claim 19. **characterized by** induction welding.

21. A process according to one of the Claims 1 to 19, **characterized by** steel wires and/or carbon fibres.

22. A process according to one or more of the Claims 1 to 21, **characterized by** the use of woven fabric construction (5) with a thickness up to 15mm.

23. A process according to Claim 22. **characterized by** the use of a woven fabric construction (5) with a thickness of 3 to 5mm.

24. A process according to one of the Claims 1 to 23, **characterized in that** all the woven fabric layers (11,12,20,21,22,23,24) are shaped singly or in groups or all together in order to fit to the walls of the moulding machine.

25. A process according to Claim 24, **characterized by** compressing the woven fabric layers (11,12,21,22,23,24) together.

26. A process according to Claim 25, **characterized by** the use of a protcctive film and/or a protective sheet between the woven fabric layers (11,12,21,22,23,24) and the compression tooling and/or at least the use of surface-hardened compression tools.

27. A process according to the Claim 25, **characterized by** the use of a protective film on the foam side of the woven fabric layer (11,12,20,21,22) with a thickness about equivalent to the final thickness of the shaped material.

28. A process according to Claim 26 or 27, **characterized by** the use of a protective film and/or sheet from PE and/or PP.

29. A process according to one of the Claims 24 to 28, **characterized by** heating the metallic woven fabric layers prior to shaping and/or after joining them together.

30. A process according to one of the Claims 1 to 29, **characterized by** the use of one or more filter layers (22) on the woven fabric and/or through the use of woven fabrics with one or more enclosed filter layers (22).

31. A process according to one or more of the Claims 1 to 30, **characterized by** the use of one-piece or multi-piece linings of the mould cavities and/or totally or partially self-supporting linings.

32. A process according to one or more of the Claims 1 to 31, **characterized by** the use of porous, gas permeable and/or water permeable moulding machine walls.

33. A process according to Claim 32, **characterized by** the use of mould walls from aluminium and/or sintered material.

## Revendications

1. Procédé de fonctionnement d'un robot de production de pièces moulées destiné à la fabrication de produits en mousse synthétique, à partir de billes, avec un espace creux de moulage, dans lequel les billes sont introduites et sont sollicitées par un caloporteur gazeux, en particulier de la vapeur chaude, le caloporteur gazeux pénétrant dans l'espace creux de moulage depuis une surface du robot de production de pièces moulées et sortant de nouveau par une autre surface du robot de production de pièces moulées et où, en au moins une surface de robot de production des pièces moulées, est prévu un tissu, **caractérisé par** l'utilisation d'un tissu (5) à plusieurs couches, avec une couche de tissu (11, 12, 20, 21, 22) à mailles fines située du côté du produit alvéolaire et une couche de tissu (23, 24) à mailles grossières sous-jacente, à titre de construction d'appui.

2. Procédé selon la revendication 1, **caractérisé par** la fabrication de pièces moulées à surface lisse.

3. Procédé la revendications 1 ou 2, **caractérisé par** l'utilisation d'une couche de tissu (11, 12, 20, 21, 22) côté produit alvéolaire et avec une largeur de maille inférieure à la moitié du diamètre des billes et/ou par l'utilisation d'une construction à tissu ayant au moins une couche de tissu de faible poids côté produit alvéolaire et/ou une évacuation de condensat.

4. Procédé selon la revendication 3, **caractérisé par** une aspiration des condensats.

5. Procédé selon la revendication 3, **caractérisé par** l'utilisation d'une chambre à vapeur, sur le trajet d'évacuation de la vapeur, et application d'un vide à la chambre à vapeur.

6. Procédé selon la revendication 3, **caractérisé par** l'utilisation d'une couche de tissu (11, 20, 21, 22) avec une largeur de maille de 0,001 à 0,5 mm, de préférence 0,005 à 0,2 mm, pour des billes d'un diamètre de 3 à 5 mm.

7. Procédé selon la revendication 4, **caractérisé par** la fabrication de surfaces à nettoyage facile pour le transport et/ou le stockage de produits alimentaires et/ou pour le traitement de pièces moulées avec scellage de feuilles minces.

8. Procédé selon la revendication 2 ou 3, **caractérisé par** l'utilisation de tissus (11, 12, 20, 21, 22, 23, 24) ayant une épaisseur de fil ou de filament usuelle, résultant de la largeur de maille, ou une épaisseur qui est égale ou inférieure au décuple de préférence, égale ou inférieur au quintuple de la largeur de maille, ou même égale ou inférieur à la largeur de maille.

9. Procédé selon l'une des revendications 1 à 8, **caractérisé par** la sollicitation de la pièce moulée en traversant le tissu, par un fluide de refroidissement, après achèvement de l'exposition à la vapeur.

10. Procédé selon la revendication 9, **caractérisé par** l'utilisation d'air de refroidissement et/ou d'eau de refroidissement à titre de fluide de refroidissement.

11. Procédé selon l'une des revendications 1 à 10, **caractérisé par** une exposition à la vapeur transversale.

12. Procédé selon la revendication 11, **caractérisé par** des ouvertures d'alimentation à vapeur et/ou des ouvertures d'évacuation de vapeur, ménagées dans les différentes parois de robot de fabrication de pièces moulées et conduites d'alimentation ou conduites d'évacuation, avec des registres ou vannes.

13. Procédé selon l'une des revendications 1 à 12, **caractérisé par** l'inversion du soufflage libre de la couche de tissu.

14. Procédé selon la revendication 13, **caractérisé par le fait qu'**on procède à un soufflage libre selon un cycle ou plusieurs cycles, indépendamment de la position des souillures, ou à soufflage libre après souillure.

15. Procédé selon la revendication 13 ou 14, **caractérisé par** l'inversion de l'écoulement de vapeur avec et/ou sans remplissage du robot de production de pièces moulées.

16. Procédé selon l'une des revendications 1 à 15, **caractérisé par** l'utilisation d'une construction à fonction d'appui (23, 24), d'une largeur de maille qui est de 1,5 à 20 fois la largeur de maille de la construction de tissu située côté produit alvéolaire, et avec une épaisseur de fil et/ou de filament qui est de 1,5 à 20 fois celle de la construction de tissu (11, 12, 20, 21, 22) située côté produit alvéolaire.

17. Procédé selon la revendication 16, **caractérisé par** l'utilisation d'une construction à tissu d'appui (23, 24) dont la largeur de maille est au moins égale à la largeur de maille de la construction de tissu (11, 12, 20, 21, 22) situé côté produit alvéolaire, plus 2,5 fois l'épaisseur de fil ou de filament de la construction de tissu (11, 12, 20, 21, 22) situé côté produite alvéolaire.

18. Procédé selon l'une des revendications 1 à 17,
**caractérisé par** utilisation d'une construction tissée (20, 21, 22, 23, 24) avec une couche en décalage (21) entre les couches de tissu.

19. Procédé selon l'une des revendications 1 à 18, **caractérisé par** l'utilisation de constructions tissées (5) dont les couches tissées (11, 12, 20, 21, 22, 23, 24) sont disposées les unes au dessous des autres et/ou sont reliées en totalité ou en partie à la paroi afférente du robot de fabrication de pièces moulées, par
a) soudage et/ou
b) collage et/ou
c) frittage et/ou
d) un élément de fixation et/ou
e) compression et/ou rabattement.

20. Procédé selon la revendication 19, **caractérisé par** un soudage inductif.

21. Procédé selon l'une des revendications 1 à 19, **caractérisé par** des fils en acier et/ou des filaments en fibre de carbone.

22. Procédé selon l'une ou plusieurs des revendications 1 à 21, **caractérisé par** l'utilisation de constructions en tissu (5) d'une épaisseur allant jusqu'à 15 mm.

23. Procédé selon la revendication 22, **caractérisé par** l'utilisation d'une construction en tissu (5) d'une épaisseur de 3 à 5 mm.

24. Procédé selon une des revendications 1 à 23, **caractérisé par** une déformation, individuelle ou par groupes ou commune, de toutes les couches de tissu (11, 12, 20, 21, 22, 23, 24) pour adaptation aux parois du robot de fabrication de pièces moulées.

25. Procédé selon la revendication 24, **caractérisé par** le pressage des couches de tissu (11, 12, 21, 22, 23, 24).

26. Procédé selon la revendication 25, **caractérisé par** l'utilisation d'une feuille protectrice et/ou d'une plaque protectrice entre la couche de tissus (11, 12, 21, 22, 23, 24) et un outil de pressage et/ou utilisation d'outils de pressage au moins durcis en surface.

27. Procédé selon la revendication 25, **caractérisé par** l'utilisation d'une feuille protectrice sur la couche de tissu (11, 12, 20, 21, 22) située côté produit alvéolaire, ayant une épaisseur d'environ l'épaisseur du reste du matériau devant être déformé.

28. Procédé selon la revendication 26 ou 27, **caractérisé par** l'utilisation de feuilles protectrices et/ou de plaques en PE et/ou en PP.

29. Procédé selon l'une des revendications 24 à 28, **caractérisé par** un traitement thermique de couches de tissu métallique avant le formage et/ou après la liaison des couches de tissu.

30. Procédé selon l'une des revendications 1 à 29, **caractérisé par** utilisation d'une ou plusieurs couches filtrantes (22) sur le tissu et/ou par utilisation de tissu ayant une ou plusieurs couches filtrantes (22) incluses.

31. Procédé selon l'une ou plusieurs des revendications 1 à 30, **caractérisé par** l'utilisation de revêtement d'une seule pièce ou en plusieurs pièces, d'espace creux de pièces de moulage et/ou de revêtement totalement ou partiellement auto-porteur.

32. Procédé selon l'une ou plusieurs des revendications 1 à 31, **caractérisé par** l'utilisation de parois de robot de fabrication de pièces moulées poreuses, perméables au gaz et/ou à l'eau.

33. Procédé selon la revendication 32, **caractérisé par** l'utilisation de parois de pièces moulées en aluminium et/ou en matériau fritté.
